# EUROPÄISCHE PATENTSCHRIFT

(11) **EP 0 609 243 B1**
(45) Veröffentlichungstag und Bekanntmachung des Hinweises auf die Patenterteilung: **26.07.1995**
(21) Anmeldenummer: 92919956.0
(22) Anmeldetag: 19.09.1992
(51) Int. Cl.: B60T 8/48

(54) **SCHLUPFGEREGELTE HYDRAULISCHE BREMSANLAGE**
REGULATED SLIP HYDRAULIC BRAKE SYSTEM
SYSTEME DE FREINAGE HYDRAULIQUE ANTIPATINAGE

(30) Priorität: 02.11.1991 DE 4136109
(43) Veröffentlichungstag der Anmeldung: 10.08.1994
(73) Patentinhaber: ITT Automotive Europe GmbH, 60488 Frankfurt (DE)
(72) Erfinder: LINHOFF, Paul, D-6233 Kelkheim-Eppenhain (DE)
(86) Internationale Anmeldenummer: EP9202166
(87) Internationale Veröffentlichungsnummer: WO9309010

(56) Entgegenhaltungen:
- DE-A- 3 727 664
- DE-A- 3 832 023
- DE-A- 3 940 177
- DE-A- 4 039 088
- GB-A- 2 230 578

## Beschreibung

Die Erfindung betrifft eine schlupfgeregelte hydraulische Bremsanlage gemäß dem Oberbegriff des Anspruches 1.

Eine solche Bremsanlage ist aus der DE- 38 32 023 A1 bekannt. Diese ist, obwohl sie bei der Blockierschutzregelung nach dem Rückförderprinzip arbeitet, mit einer selbstansaugenden Pumpe ausgestattet, welche auch zur Antriebsschlupfregelung eingesetzt wird, um über den Hauptzylinder aus dem Druckmittelbehälter Druckmittel anzusaugen und in die Radzylinder zu fördern. Die direkte Förderung in die Radzylinder hat den Vorteil, daß kein zusätzlicher Hochdruckspeicher benötigt wird.

Allerdings ist bei solchen Systemen, insbesondere bei niedrigen Temperaturen durch die hohe Viskosität des Druckmittels, die Ansprechzeit der Antriebsschlupfregelung gegenüber Systemen mit Hochdruckspeicher erhöht, da zwischen Pumpe und Druckmittelbehälter lange Leitungen und mehrere Ventile angeordnet sind, die den angesaugten Volumenstrom drosseln und zu Ansaugverlusten führen.

Die Aufgabe der vorliegenden Erfindung besteht darin, in einer gattungsgemäßen Bremsanlage bei der Antriebsschlupfregelung unter Verzicht auf einen Hochdruckspeicher eine schnelle Füllung der Radzylinder zu gewährleisten.

Diese Aufgabe wird gelöst durch den kennzeichnenden Teil des Hauptanspruchs.

Dadurch, daß ein Bereitschaftvolumen vom Niederdruckspeicher für die Antriebsschlupfregelung zur Verfügung steht, entstehen aufgrund des kurzen ASR-Saugkanals zur Saugseite der Pumpe keine Ansaugverluste. Zusätzlich wirkt sich der Vordruck im Niederdruckspeicher positiv auf die anfängliche Förderleistung der Pumpe aus.

Die Verwendung eines weggesteuerten, vom Kolbenhub des Niederdruckspeichers abhängig geschalteten Ventils für den ABS-Saugkanal nach Anspruch 2 erspart eine aufwendige Elektronik mit Sensoren und Leitungen.

Besonders einfach und platzsparend gestaltet sich ein Niederdruckspeicher mit integriertem kolbenhubanhängigem Ventil nach Anspruch 3, bei welchem ein aus dem Kolben ragender Stößel als Ventilschließglied wirkt.

Zur weiteren Verdeutlichung des Erfindungsgedankens dient die folgende Beschreibung eines bevorzugten Ausführungsbeispiels anhand einer Zeichnung.

Dargestellt ist ein Bremskanal, der zu der Radbremse eines angetriebenen Rades gehört.

Auf dem Hauptzylinder 1 sitzt der Druckmittelbehälter 2, der der Druckmittelversorgung des Hauptzylinders 1 und der Bremskreise I und II dient. Vom Hauptzylinder 1 verläuft die Bremsleitung 3 zum Radzylinder 4. Der Radzylinder 4 ist über die Entlastungsleitung 5 mit dem Niederdruckspeicher 6 verbunden. Vom Niederdruckspeicher 6 führen der ABS-Saugkanal 7 und der ASR-Saugkanal 8 zur Saugseite der Pumpe 9 die über die Nachlaufleitung 10 und den Hauptzylinder 1 ebenfalls mit dem Druckmittelbehälter 2 in Verbindung steht. Die Druckseite der Pumpe 9 schließt über die Druckleitung 11 an die Bremsleitung 3 an und über die Überdruckleitung 12 mit dem Überdruckventil 18 an den Niederdruckspeicher 6.

In der Bremsleitung 3 ist oberhalb und unterhalb der Einmündung der Druckleitung 11 je ein stromlos offenes Magnetventil 13 bzw. 14 angeordnet, wobei dem unteren davon, dem näher am Radzylinder liegenden Einlaßventil 14, das Rückschlagventil 15' parallelgeschaltet ist, das zum Hauptzylinder 21 hin öffnet. Das obere stromlos offene Magnetventil 13 dient als ASR-Trennventil mit parallelgeschaltetem Rückschlagventil, welches das Einbremsen in die Bremskreise auch während der Antriebsschlupfregelung erlaubt, wenn das ASR-Trennventil geschlossen ist. In der Rücklaufleitung 5 liegt das stromlos geschlossenene elektromagnetische Auslaßventil 15. Der ASR-Saugkanal 8 ist mit dem ASR-Ladeventil 16 ausgestattet, und in der Nachlaufleitung 10 befindet sich das hydraulisch betätigte, drucklos offene Nashlaufventil 17, das bei jeder Pedalbremsung vom Druck des Hauptzylinders 1 geschlossen wird. Das Rückschlagventil 29 in der Nachlaufleitung 10 läßt nur einen Druckmittelstrom vom Hauptzylinder 1 zur Saugseite der Pumpe 9 zu, während das Rückschlagventil 30 in der Druckleitung 11 verhindert, daß der Niederdruckspeicher 6 durch eine Pedalbremsung gefüllt wird und dabei Volumen schluckt.

Eine der Besonderheiten dieser Bremsanlage liegt im Aufbau des Niederdruckspeichers 6. In der zylindrischen Bohrung 19 liegt abgedichtet und axial verschiebbar der Kolben 20, der von der Druckfeder 21 axial belastet ist. Der die Druckfeder 21 aufnehmende Teil der Bohrung 19 steht mit der Atmosphäre in Verbindung und ist druckmittelfrei. Die der Druckfeder 21 abgewandte Stirnseite 22 des Kolbens 20 begrenzt den Speicherraum 23. Durch ein zentrisches Loch in der Stirnseite 22 ist der Stößel 24 geführt, der zusammen mit dem Ventilsitz 25 ein vom Kolbenweg gesteuertes Ventil bildet. Im Innern des Kolbens 20 befindet sich eine gegenüber den Stößeldurchmesser erweiterte Axialbohrung 26, in welcher die Druckfeder 27 den Stößel 24 zum Speicherraum 23 hin beaufschlagt. Dabei ist der Weg des Stößels 24 aus dem Kolben 20 heraus durch den umlaufenden Anschlagwulst 28 begrenzt.

Dieser Aufbau des Niederdruckspeichers 6 bewirkt, daß der Stößel 24 dicht auf den Ventilsitz 25 liegt, solange der Kolbenhub kleiner ist als die Strecke x. Erst beim Durchlaufen der Strecke y, die den restlichen Kolbenhub markiert, wird der Stößel 24 vom Kolben 20 mitgenommen und gibt den ABS-Saugkanal 7 frei, der an den Ventilsitz 25 anliegt. Die Rücklaufleitung 5 und der ASR-Saugkanal 8 welche auch zur Speicherkammer 23 führen, sind unabhängig vom Kolbenhub zu sperren.

Die Funktionsweise dieser Bremsanlage ist nun folgende:
Bei einer unkritischen, pedalbetätigten Bremsung befinden sich alle Ventile in der dargestellten Position, nur das Nachlaufventil 17 wird vom Druck im Hauptzylinder 1 geschlossen. Die Druckmittelzufuhr vom Hauptzylinder 1 zum Radzylinder 4 und der Druckabbau erfolgen über die Bremsleitung 3. Überschreitet der Bremsschlupf einen definierten Schwellenwert, arbeitet die Bremsanlage im Blockierschutzbetrieb nach dem an sich bekannten Rückförderprinzip. Dabei bleibt das durch die dargestellte Kolbenposition am Ende der Strecke x im Niederdruckspeicher 6 eingeschlossene Bereitschaftsvolumen für die Blockierschutzfunktion unwirksam, da das Ventil 24/25 zum ABS-Saugkanal 7 geschlossen ist, und es wird nur der Kolbenhub über die Strecke y genutzt, wo der Stößel 24 vom Ventilsitz 25 abhebt. Das geschlossene Ventil 24/25 schützt im ABS-Betrieb den Radzylinder 4 vor Unterdruck von seiten der Pumpe 9.

Bei Antriebsschlupfregelung (ASR) bleibt das Nachlaufventil 17 geöffnet. Zu Beginn einer ASR-Phase wird das ASR-Ladeventil 16 geöffnet, und das Bereitschaftsvolumen steht der Saugseite der Pumpe zur Verfügung. Durch den Vordruck im Niederdruckspeicher 6 und den kurzen ASR-Saugkanal 8 spricht die Antriebsschlupfregelung schnell an. Erst wenn im Laufe der Antriebsschlupfregelung zusätzliche Druckmittelvolumen benötigt wird, wird die selbstansaugende Pumpe 9 aus dem Druckmittelbehälter 2 über den Hauptzylinder 1 und die Nachlaufleitung 10 versorgt. Sie pumpt auf bekannte Weise durch die Druckleitung 11 und die Bremsleitung 3 in den Radzylinder 4. Die Druckregelung erfolgt durch Schalten des Einlaßventil 14 und Auslaßventil 15, über welches das Druckmittel wieder dem Niederdruckspeicher 6 zugeführt wird.

Zur Sicherstellung des Breitschaftsvolumens im Niederdruckspeicher 6 sind Testläufe der Pumpe 9 vorgesehen, bei denen das Einlaßventil 14 geschlossen wird und der Niederdruckspeicher 6 über das Überdruckventil 18 bis zum Öffnen des Ventils 24/25 gefüllt wird. Solche Testläufe können bei jedem Anlassen des Motors oder auch öfter durchgeführt werden. Der Vordruck des Überdruckventils 18 liegt bei dieser Anordnung höher als der maximal aufzubringende Bremsdruck.

### Bezugszeichenliste

- 1: Hauptzylinder
- 2: Druckmittelbehälter
- 3: Bremsleitung
- 4: Radzylinder
- 5: Entlastungsleitung
- 6: Niederdruckspeicher
- 7: ABS-Saugkanal
- 8: ASR-Saugkanal
- 9: Pumpe
- 10: Nachlaufleitung
- 11: Druckleitung
- 12: Überdruckleitung
- 13: ASR-Trennventil
- 14: Einlaßventil
- 15: Auslaßventil
- 15': Rückschlagventil
- 16: ASR-Ladeventil
- 17: Nachlaufventil
- 18: Überdruckventil
- 19: Bohrung
- 20: Kolben
- 21: Druckfeder
- 22: Stirnseite
- 23: Speicherraum
- 24: Stößel
- 25: Ventilsitz
- 26: Axialbohrung
- 27: Druckfeder
- 28: Anschlagwulst
- 29: Rückschlagventil
- 30: Rückschlagventil

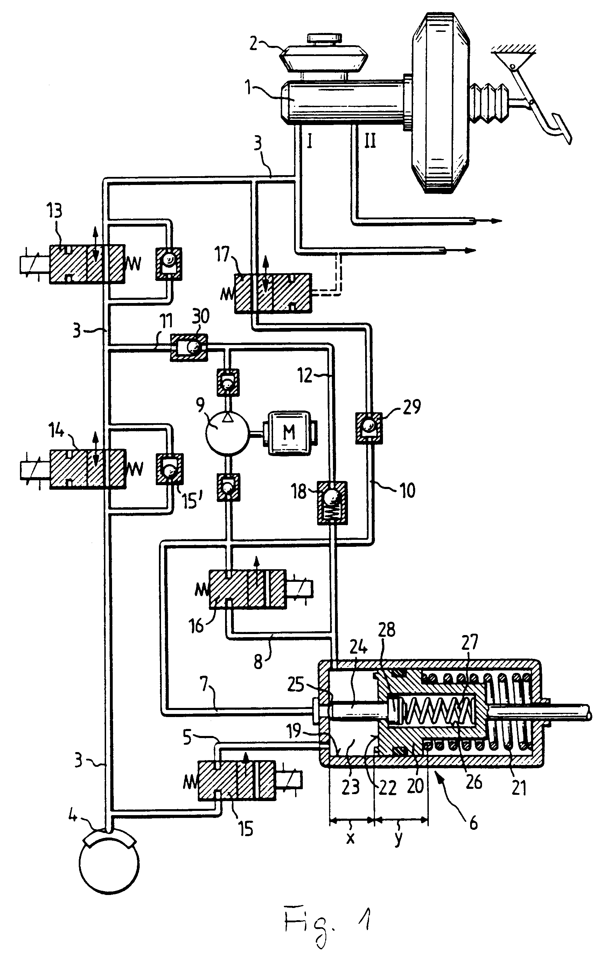

## Patentansprüche

1. Schlupfgeregelte, hydraulische Bremsanlage mit einem Hauptzylinder und einem daran angeschlossenen Druckmittelbehälter, mit einer Bremsleitung, die den Hauptzylinder mit einem Radzylinder eines angetriebenen Rades verbindet, mit einem Niederdruckspeicher, der über eine Rücklaufleitung mit dem Radzylinder verbunden ist, mit einer selbstansaugenden Pumpe, die mit ihrer Saugseite an den Niederdruckspeicher sowie über eine Nachlaufleitung und den Hauptzylinder an den Druckmittelbehälter angeschlossen ist und die mit ihrer Druckseite an die Bremsleitung angeschlossen ist, mit einer Einlaß- und Auslaßventilanordnung die den Druck in den Radzylindern regelt und mit einer weiteren Ventilanordnung, die bei einer pedalbetätigten Bremsung die Saugseite der Pumpe vom Hauptzylinder abtrennt und bei einer Antriebsschlupfregelung die Verbindung vom Hauptzylinder zum Radzylinder unterbricht, dadurch **gekennzeichnet**, daß die Verbindung zwischen der Saugseite der Pumpe (9) und dem Niederdruckspeicher (6) aus je einem ABS-Saugkanal (7) und ASR-Saugkanal (8) besteht, wobei der ABS-Saugkanal (7) geschlossen ist, solange das im Niederdruckspeicher (6) gespeicherte Druckmittelvolumen kleiner ist als ein bestimmtes Bereitschaftsvolumen, und wobei der ASR-Saugkanal (8) unabhängig vom gespeicherten Druckmittelvolumen mit einem ASR-Ladeventil (16) zu öffnen und zu schließen ist.

2. Bremsanlage nach Anspruch 1, dadurch **gekennzeichnet,** daß der Niederdruckspeicher (6) in einer Gehäusebohrung (19) einen gegen die Gehäusebohrung (19) abgedichteten, axial verschiebbaren Kolben (20) aufweist, der einen druckmittelhaltigen, als Speicherraum (23) dienenden Axialabschnitt der Gehäusebohrung (19) von einem druckmittelfreien Axialabschnitt der Gehäusebohrung (19) trennt und daß der ABS-Saugkanal (7) von einem Ventil (24,25) kontrolliert wird, das abhängig von der Position des Kolbens (20) geschaltet wird.

3. Bremsanlage nach Anspruch 2, dadurch **gekennzeichnet**, daß der Kolben (20) vom druckmittelfreien Axialabschnitt der Gehäusebohrung (19) her von einer Druckfeder (21) zum Speicherraum (23) hin belastet ist und das axial aus dem Kolben (20) in den Speicherraum (23) hinein ein Stößel (24) ragt, der innerhalb des Kolbens (20) von einer Druckfeder (27) zum Speicherraum (23) hin beaufschlagt ist und der mit einem Ventilsitz (25) als Ventil fungiert, das den ABS-Saugkanal (7) kontrolliert, wobei der Weg des Stößels (24) aus dem Kolben (20) heraus durch einen Anschlag (28) begrenzt ist.

## Claims

1. A slip-controlled hydraulic brake system including a master cylinder and a pressure fluid reservoir connected to the master cylinder, further including a brake conduit connecting the master cylinder to a wheel cylinder of a driven wheel, a low-pressure accumulator which is connected, through a return conduit, to the wheel cylinder, a self-priming pump which, with its intake side, is connected to the low-pressure accumulator and, through an intake conduit and the master cylinder, is connected to the pressure fluid reservoir and which, with its pressure side, is in communication with the brake conduit, an inlet and outlet valve arrangement controlling the pressure within the wheel cylinders, and another valve arrangement which, in a pedal-actuated braking operation, separates the intake side of the pump from the master cylinder and, during traction slip control, discontinues the connection between the master cylinder and the wheel cylinder,
characterized in that the communication between the intake side of the pump (9) and the low-pressure accumulator (6) comprises one brake slip control intake channel (7) and one traction slip control intake channel (8), the brake slip control intake channel (7) being closed as long as the pressure fluid volume stored within the low-pressure accumulator (6) is less than a predetermined standby volume, while the traction slip control intake channel (8) is opened and closed by a traction slip control loading valve (16) regardless of the stored pressure fluid volume.

2. A brake system as claimed in claim 1,
characterized in that the low-pressure accumulator (6), in a housing bore (19), accommodates an axially displaceable piston (20) which is sealed against the housing bore (19) and separates an axial section of the housing bore (19), which contains pressure fluid and serves as a reservoir (23), from a pressure fluid-free axial section of the housing bore (19), and that the brake slip control intake channel (7) is controlled by a valve (24, 25) which is operated depending on the position of the piston (20).

3. A brake system as claimed in claim 2,
characterized in that the piston (20), from the pressure fluid-free axial section of the housing bore (19), is loaded by a compression spring (21) toward the reservoir (23), and that a plunger (24) axially protrudes from the piston (20) into the reservoir (23), which plunger, within the piston (20), is acted upon by a compression spring (27) toward the reservoir (23) and, along with a valve seat (25), acts as a valve controlling the brake slip control intake channel (7), the stroke of the plunger (24) out of the piston (20) being limited by a stop (28).

## Revendications

1. Système hydraulique de freinage à régulation anti-patinage, comportant un maître-cylindre et un réservoir de fluide de pression raccordé à celui-ci, comportant une conduite de frein reliant le maître-cylindre au cylindre de roue d'une roue motrice, comportant un accumulateur basse pression relié au cylindre de roue via une conduite de retour, comportant une pompe à auto-amorçage, dont le côté aspiration est raccordé à l'accumulateur basse pression ainsi qu'au réservoir de fluide de pression via une conduite de réalimentation et le maître-cylindre, et dont le côté refoulement est raccordé à la conduite de frein, comportant un agencement de valves d'admission et d'échappement régulant la pression régnant dans les cylindres de roues, et comportant un autre agencement de valves qui, lors d'un freinage commandé par la pédale, isole le côté aspiration de la pompe par rapport au maître-cylindre et supprime la liaison entre le maître-cylindre et le cylindre de roue lors d'une régulation anti-patinage à la traction,
caractérisé en ce que la liaison entre le côté aspiration de la pompe (9) et l'accumulateur basse pression (6) est respectivement constituée d'une canalisation d'aspiration ABS (7) et d'une canalisation d'aspiration ASR (8), la canalisation d'aspiration ABS (7) étant fermée tant que le volume de fluide sous pression emmagasiné dans l'accumulateur basse pression (6) est inférieur à un volume de réserve prédéterminé, et en ce que la canalisation d'aspiration ASR (8) est ouverte et fermée, à l'aide d'une valve de chargement ASR (16), indépendamment du volume emmagasiné de fluide sous pression.

2. Système de freinage selon la revendication 1, caractérisé en ce que l'accumulateur basse pression (6) comporte un piston (20) coulissant axialement dans un alésage (19) du corps, de façon étanche par rapport à l'alésage (19) du corps, isolant une section axiale de l'alésage (19) du corps, contenant du fluide sous pression, servant de chambre d'accumulateur (23), par rapport à une section axiale de l'alésage (19) du corps, qui est exempte de fluide sous pression, et en ce que la canalisation d'aspiration ABS (7) est commandée par une soupape (24/25), qui est commandée en fonction de la position du piston (20).

3. Système de freinage selon la revendication 2, caractérisé en ce que le piston (20) est rappelé, depuis la section axiale de l'alésage du corps, qui est exempte de fluide sous pression, en direction de la chambre d'accumulateur (23), au moyen d'un ressort de pression (21), et en ce qu'un poussoir (24) fait saillie axialement, à partir du piston (20), vers l'intérieur de la chambre d'accumulateur (23), ce poussoir étant rappelé, à l'intérieur du piston (20), en direction de la chambre d'accumulateur (23), par un ressort de pression (27), et coopérant avec un siège de soupape (25) pour former une soupape qui commande la canalisation d'aspiration ABS (7), la course du poussoir (24) hors du piston (20) étant limitée par une butée (28).
